# EUROPÄISCHE PATENTANMELDUNG

(11) **EP 1 688 032 A1**
(43) Veröffentlichungstag der Anmeldung: **09.08.2006**
(21) Anmeldenummer: 05019721.9
(22) Anmeldetag: 10.09.2005
(51) Int. Cl.: A01G 3/053, A01D 69/02, A01D 34/78

(54) **Gartengerät mit einem elektromotorischen Antriebssystem mit Mehrphasenmotor**

(30) Priorität: 03.02.2005 DE 202005001674 U
(71) Anmelder: KMK Kunststoff- und Montagetechnik GmbH, 56348 Dörscheid (DE)
(72) Erfinder: Kolb, Walter, 57518 Betzdorf (DE)
(74) Vertreter: Fuchs Mehler Weiss & Fritzsche

(57) **Zusammenfassung**

Es wird ein Gartengerät (1) mit einem elektromotorischen Antriebssystem (2) aus einem Mehrphasenmotor und mit einer Elektronik beschrieben. Die Elektronik formt Gleichstrom aus einer Batterie in Mehrphasenstrom für den Mehrphasenmotor um. Das Gartengerät (1) weist ein Gehäuse (3) auf, wobei das Antriebssystem (2) vollständig in dem Gehäuse (3) feuchtigkeits- und staubdicht eingekapselt ist.

## Beschreibung

Die vorliegende Erfindung betrifft ein motorisch betriebenes Gartengerät wie ein handgeführtes Gartengerät, aber auch angetriebene Gartengeräte wie Aufsitzrasenmäher.

Grundsätzlich kommen zwei Antriebssysteme im Gartenbereich bei derartigen Gartengeräten zum Einsatz. Zum einen gibt es die Elektrogeräte mit üblicherweise einem Wechselstrommotor, welcher an das 220 V Haushaltsnetz angeschlossen wird. Problematisch dabei ist, dass im Arbeitsbereich Hochspannung geführt wird, was eine Gefährdung per se bedeutet, etwa wenn das elektrische Zuleitungskabel durch bspw. ein Messer des Gerätes zerschnitten wird. Auch die Geräuschentwicklung bei derartigen Geräten ist beträchtlich und bei Dauereinsätzen des Gerätes unangenehm. Bei 220V Elektrogeräten mit den hohen Drehzahlen sind Kollektorenmotore im Einsatz. Diese benötigen eine entsprechende Kühlung und haben deshalb Lüftungsschlitze. Diese auf dem Markt befindlichen Geräte dürfen bei Regen oder feuchten Hecken, z.B. Heckenscheren, nicht eingesetzt werden.

Als zweites Antriebssystem kommt ein Verbrennungsmotor in Betracht und auch tatsächlich zum Einsatz. Hier ergeben sich erhebliche Geräuschentwicklungen sowie die Entwicklung von Abgasen. Der Anwender des Gerätes ist diesen Abgasen während des Betriebs ausgesetzt, was gesundheitlich bedenklich ist. Neben dem Geräusch und Abgasentwicklungen kommen heiße Teile hinzu, wie Auspuff und Zylinder, was zu erheblichen Verbrennungen führen kann.

Vor diesem Hintergrund ist es nun die Aufgabe der vorliegenden Erfindung, ein Gartengerät vorzuschlagen, welches die Probleme der bekannten Antriebsarten löst.

Gelöst wird diese Aufgabe durch das Gartengerät mit den Merkmalen des Anspruchs 1. Vorteilhafte Weiterbildungen ergeben sich aus den Unteransprüchen.

Demgemäß wird ein Gartengerät vorgeschlagen, das ein elektromotorisches Antriebssystem aus einem Mehrphasenmotor sowie eine Elektronik aufweist, die Gleichstrom aus einer Batterie in Mehrphasenstrom für den Mehrphasenmotor umformt, und darüber hinaus ein Gehäuse aufweist, wobei das Antriebssystem vollständig in dem Gehäuse feuchtigkeits- und staubdicht eingekapselt ist. Die Kapselung entspricht vorzugsweise der Schutzklasse IP 44. Möglich ist die vollständige Einkapselung des Motors aufgrund der kleinen Bauweise des Motors, einer fehlenden Wärmeentwicklung des Motors sowie aufgrund der fehlenden Wärmeabgabe seitens der Elektronik. Im Vergleich zum herkömmlichen Verbrennungsmotorantrieb sind keine Schutzmaßnahmen gegen Verbrennungen notwendig, da kein unbeabsichtigtes Verbrennen möglich ist.

Aufgrund der fehlenden Wärmeabgabe kann der Motor bzw. das ihn aufnehmende Gehäuse direkt als Griff Verwendung finden im Falle eines handgeführten Gartengerätes.

Der Mehrphasenmotor, vorzugsweise ein Dreiphasen-Asynchronmotor, benötigt kein Getriebe, da die stufenlos einstellbare Drehzahl das Drehmoment des Motors nur geringfügig beeinflusst.

Der Mehrphasenmotor kann auch als tragendes Maschinenelement verwendet werden, da eine Beeinflussung der anderen Bauelemente nicht stattfindet.

Da der Motor nur eine geringe bzw. kaum wahrnehmbare Geräuschentwicklung hat, sind weitere Dämmungsmaßnahmen nicht notwendig.

Ein besonderer Vorteil ist, dass ein als Handgerät ausgeführtes Gerät in jeder beliebigen Lage betrieben werden kann, was bei den herkömmlichen Handgeräten mit Verbrennungsmotor und Elektromotor mit Kabelzuführung nicht möglich ist.

Aufgrund der vollständigen Kapselung des Antriebssystems in dem Gehäuse ist der Einsatz des Gerätes völlig witterungsunabhängig.

Durch die Spannungsversorgung aus einer Batterie bzw. Akkumulator kommt nur eine niedrige Spannung zum Einsatz, die dann in der Elektronik in einen Mehrphasenstrom umgewandelt wird. Auch diese Mehrphasenspannung ist eine niedrige Spannung, so dass keine elektrische Gefahrenquelle gegeben ist.

Die Batterien, beispielsweise wenigstens 3 Stück mit einer Spannung von 12V, so dass sich bei einer Reihenschaltung eine Versorgungsspannung von 3x12V = 36V ergibt, können in einem Tragegestell oder Rucksack untergebracht sein, ebenso wie die Elektronik. Im letzteren Fall wäre die Einheit eine einmalige Anschaffung, mit der verschiedene Geräte betrieben werden könnten. Im Falle der Ausbildung des Gerätes als Aufsitzrasenmäher können die Batterien vom Fahrgestell getragen werden.

Gegenüber den herkömmlichen Verbrennungsmotoren steht der Mehrphasenmotor, wie er im Rahmen der vorliegenden Erfindung zum Einsatz kommt, klar im Vorteil, was das wesentlich geringere Gewicht, die fehlende Abgasentwicklung und die äußerst geringe Geräuschentwicklung betrifft.

Gemäß einer vorteilhaften Weiterbildung ist vorgesehen, dass auch die Elektronik in dem Gehäuse eingekapselt ist. Hierdurch wird das ganze Aggregat vollkommen witterungsunabhängig, feuchtigkeitsunabhängig und schmutzunabhängig.

Im Falle der Ausbildung des angetriebenen Werkzeugs als rotierendes Messer, beispielsweise bei einem Rasenmäher, wird die Anwendung eines Mehrphasenmotors noch effektiver, wenn eine Schwungscheibe als Schwungmasse zum Einsatz kommt, welche mit dem rotierenden Messer vom Motor angetrieben wird. Die Schwungscheibe nivelliert bei hoher Geschwindigkeit von beispielsweise 6000 min⁻¹ Spitzen im Drehmomentenverlauf. Gemessen werden kann dies anhand des Energieaufnahmeverlaufs. Zwar dauert das Anlaufen des Motors etwas länger, die Schwungscheibe bewirkt aber, dass sich der Motor wie ein wesentlich leistungshöherer Elektro- oder Verbrennungsmotor verhält. Sie wirkt als Energiespeicher und erhöht die Schneidwirkung deutlich.

Das Gartengerät kann in bevorzugter Ausführung eine Heckenschere, eine Kettensäge, eine Motorsense oder aber ein Rasenmäher sein. Weitere Einsätze sind denkbar. Es kann insbesondere auch ein Aufsitzrasenmäher sein.

Die Erfindung wird nachfolgend anhand dreier Ausführungsbeispiele näher erläutert. Hierbei zeigen:
- Figur 1: ein erstes Ausführungsbeispiel des Gartengerätes in Form einer Kettensäge,
- Figur 2: ein zweites Ausführungsbeispiel des Gartengerätes in Form einer Heckenschere,
- Figur 3: ein drittes Ausführungsbeispiel des Gartengerätes in Form einer Motorsense,
- Figur 4: eine Schwungscheibe an einem rotierenden Messer eines Rasenmähers, und
- Figur 5: einen Rasenmäher von schräg unten mit der Schwungscheibe und dem rotierenden Messer aus Figur 4.

Nachfolgend sind gleiche Teile mit denselben Bezugszeichen versehen.

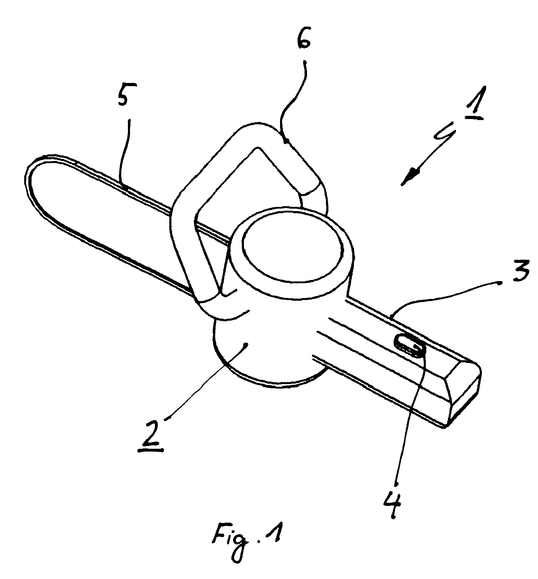

Figur 1 zeigt eine schematische Ansicht eines handgeführten Gartengerätes 1 in Form einer Kettensäge. In dem hermetisch abgeschlossenen Gehäuse 3 sitzt das elektromotorische Antriebssystem 2, welches über einen Mehrphasenmotor verfügt sowie eine Elektronik (Wandler) aufweist, welche Gleichstrom aus einer Batterie (nicht dargestellt) in Mehrphasenstrom umformt. In das Gehäuse 3 eingelassen ist ein Ein-/Aus-Schalter 4. Das Antriebssystem 2 treibt eine Kette 5 zum Sägen an. An das Gehäuse 3 im Bereich des Antriebssystems 2 ist ein Sicherheitsbügel 6 angeformt, der verhindert, dass eine Hand des Bedieners in den Bereich der laufenden Kette 5 kommt.

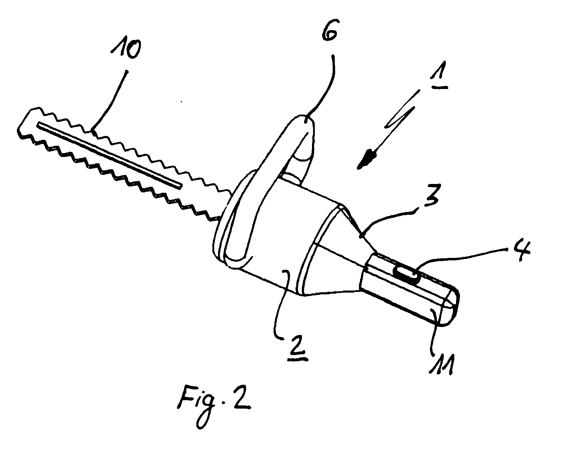

Figur 2 zeigt das Gerät 1 in Form einer Heckenschere. Wieder ist in einem Gehäuse 3 das elektromotorische Antriebssystem 2 eingekapselt. Auch hier ist wieder ein Sicherheitsbügel 6 an das Gehäuse 3 im Bereich des Antriebssystems 2 angeformt. Das Antriebssystem 2 treibt vorliegend das Messer 10 der Heckenschere an. Rückwärtig ist das Gehaüse 3 in Form eines Handgriffs 11 ausgeformt. In dem Handgriff 11 integriert ist ein Ein-/Aus-Schalter 4.

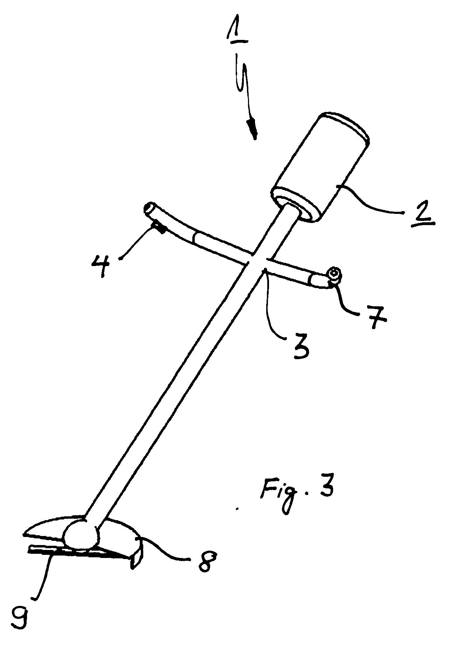

Figur 3 zeigt ein Gerät 1 in Form einer Motorsense. Kopfseitig ist das Antriebssystem 2 in dem Gesamtgehäuse 3 eingekapselt. Die Motorsense weist einen Handgriff 7 mit integriertem Ein-/Aus-Schalter 4 auf. Am unteren Ende des Gehäuses 3 ist eine Messerabdeckung 8 angeformt zum Schutz vor dem rotierenden Messer 9, welches vom Antriebssystem 2 angetrieben wird.

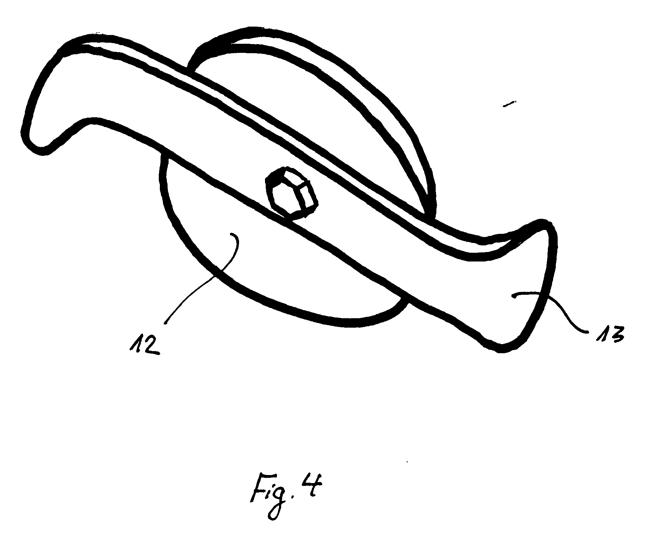

In Figur 4 ist ein rotierendes Messer 13 beispielsweise für einen Rasenmäher dargestellt. Mit dem Messer 13 verbunden ist eine Schwungscheibe 12, die den Drehmomentenverlauf nivelliert und insgesamt bei hoher Drehzahl für eine Leistung sorgt, die normalerweise nur von wesentlich leistungshöheren Motoren erzielt werden.

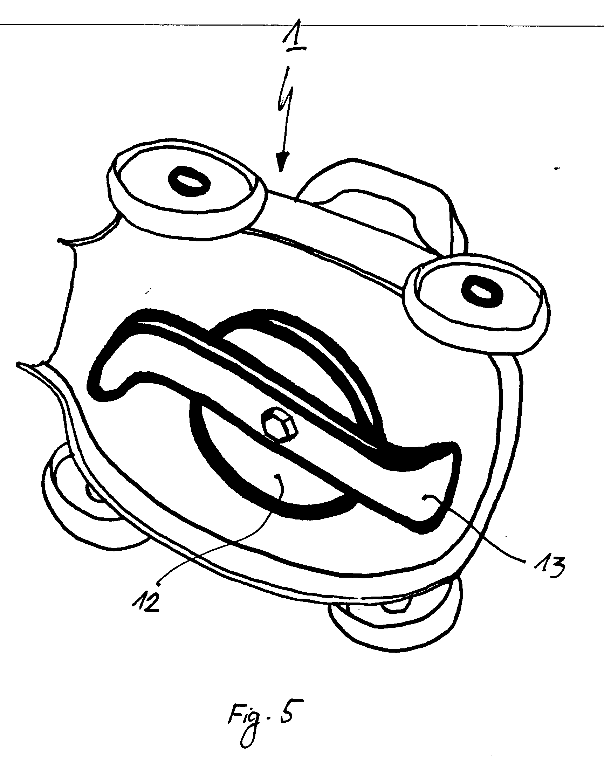

Figur 5 zeigt abschließend einen Rasenmäher 1 von unten mit montierter Schwungscheibe 12 und rotierendem Messer 13.

Es wird betont, dass die vollständige Einkapselung des elektromotorischen Antriebssystems nur stattfinden kann, da ein Mehrphasenmotor, vorzugsweise ein Dreiphasen-Asynchronmotor, zum Einsatz kommt mit den eingangs beschriebenen vorteilhaften Betriebseigenschaften. Der Bediener ist keinerlei zusätzlichen Gefahren wie einer elektrischen Gefahrenquelle, aber auch keiner zusätzlichen Geräuschquelle sowie Abgasquellen ausgesetzt, wie dies bei Geräten im Stand der Technik der Fall ist.

### Bezugszeichenliste

- 1: Gartengerät
- 2: Elektromotorisches Antriebssystem
- 3: Gehäuse
- 4: Ein-/Aus-Schalter
- 5: Kette zum Sägen
- 6: Sicherheitsbügel
- 7: Handgriff
- 8: Messerabdeckung
- 9: Messer (Motorsense)
- 10: Messer (Heckenschere)
- 11: Handgriff
- 12: Messer (Rasenmäher)
- 13: Schwungscheibe (Rasenmäher)

## Patentansprüche

1. Gartengerät (1) mit einem elektromotorischen Antriebssystem (2) aus einem Mehrphasenmotor und mit einer Elektronik, die Gleichstrom aus einer Batterie in Mehrphasenstrom für den Mehrphasenmotor umformt, und mit einem Gehäuse (3), wobei das Antriebssystem (2) vollständig in dem Gehäuse (3) feuchtigkeits- und staubdicht eingekapselt ist.

2. Gartengerät nach Anspruch 1, **dadurch gekennzeichnet, dass** auch die Elektronik in dem Gehäuse (3) eingekapselt ist.

3. Gartengerät nach Anspruch 1 oder 2, **dadurch gekennzeichnet, dass** es eine Heckenschere ist.

4. Gartengerät nach Anspruch 1 oder 2, **dadurch gekennzeichnet, dass** es eine Kettensäge ist.

5. Gartengerät nach Anspruch 1 oder 2, **dadurch gekennzeichnet, dass** es eine Motorsense ist.

6. Gartengerät nach Anspruch 1 oder 2, **dadurch gekennzeichnet, dass** ein Rasenmäher ist.

7. Gartengerät nach Anspruch 1 oder 2 mit einem rotierenden Messer (12) als angetriebenes Werkzeug, **dadurch gekennzeichnet, dass** mit dem Messer (12) eine Schwungscheibe verbunden ist.
